# EUROPÄISCHE PATENTSCHRIFT

(11) **EP 3 253 627 B1**
(45) Veröffentlichungstag und Bekanntmachung des Hinweises auf die Patenterteilung: **02.01.2019**
(21) Anmeldenummer: 16702690.5
(22) Anmeldetag: 29.01.2016
(51) Int. Cl.: B60T 7/12, B60W 30/18, F02N 11/08

(54) **STEUEREINHEIT UND VERFAHREN ZUM VERHINDERN EINER UNGEWOLLTEN FAHRZEUGBEWEGUNG**
CONTROL UNIT AND METHOD FOR PREVENTING AN UNDESIRED VEHICLE MOTION
UNITÉ DE COMMANDE ET PROCÉDÉ DESTINÉ À EMPÊCHER UN DÉPLACEMENT INVOLONTAIRE D'UN VÉHICULE

(30) Priorität: 05.02.2015 DE 102015202093
(43) Veröffentlichungstag der Anmeldung: 13.12.2017
(73) Patentinhaber: Bayerische Motoren Werke Aktiengesellschaft, 80809 München (DE)
(72) Erfinder: HÄRDTL, Sebastian, 82041 Oberhaching (DE)
(86) Internationale Anmeldenummer: PCT/EP2016/051885
(87) Internationale Veröffentlichungsnummer: WO 2016/124488

(56) Entgegenhaltungen:
- EP-A1- 2 719 598
- DE-A1-102009 042 032
- DE-A1-102011 080 775
- US-A1- 2002 028 726
- US-A1- 2011 136 624

## Beschreibung

Die Erfindung bezieht sich auf eine Steuereinheit und ein Verfahren zum Verhindern einer ungewollten Fahrzeugbewegung während eines automatischen Abschaltvorgangs einer Antriebsmaschine in einem Kraftfahrzeug. Derzeitig werden Brennkraftmaschinen meist mittels eines Zündschlüssels durch den Fahrer manuell abgeschaltet. Eine Ausnahme stellt ein Verfahren dar, welches in der DE 100 23 331 A1 vorgestellt wird. Dabei wird anstelle des Zündschlüssels die Bremspedalstellung bzw. der Bremspedaldruck ausgewertet. Der Abschaltvorgang der Brennkraftmaschine wird eingeleitet, wenn nach Erreichen des Stillstands des Kraftfahrzeugs das Bremspedal in seiner bereits betätigten Stellung stärker betätigt wird. Zur Weiterfahrt wird das Bremspedal losgelassen und das Gaspedal gedrückt, wonach ein Start der Brennkraftmaschine eingeleitet wird. Nachteilig ist an derartigen Verfahren, dass alleine der Kraftfahrzeugfahrer für das Abschalten der Brennkraftmaschine verantwortlich ist. Analysen des heutigen Fahrverhaltens zeigen, dass trotz eines gestiegenen Umweltbewusstseins und gestiegener Kraftstoffpreise ein manuelles Abschalten der Brennkraftmaschine, z. B. an Verkehrsampeln, selten eigenständig erfolgt.

Um Kraftstoffverbrauch und Schadstoffemissionen zu reduzieren, werden bereits Systeme in Fahrzeugen eingesetzt, welche die Brennkraftmaschine eines Kraftfahrzeugs unter bestimmten Voraussetzungen bzw. bei Vorliegen vorgegebener Abschaltbedingungen automatisch abschalten und bei Vorliegen vorgegebener Anschaltbedingungen automatisch wieder anschalten. Derartige Verfahren und Systeme bzw. Start-StoppEinrichtungen sind vor allem für den Stadtverkehr zur Reduzierung des Kraftstoffverbrauchs geeignet, da im Stadtverkehr das Fahrzeug oft an Ampeln oder aufgrund des Verkehrs zum Stehen kommt und der Betrieb der Brennkraftmaschine nicht erforderlich ist.

Derzeit sind bei den einzelnen Fahrzeugherstellern verschiedene Abschalt- und Anschaltlogiken mit unterschiedlichen Vorteilen vertreten. So sind Fahrzeuge mit Automatikgetriebe auf dem Markt, bei denen der Motor automatisch abgeschaltet wird, wenn der Fahrer das Fahrzeug bis in den Stillstand abgebremst hat. Der Motor wird wieder gestartet, sobald das Bremspedal gelöst wird. Eine andere Abschaltlogik bei Automatikfahrzeugen sieht vor, dass der Motor erst nach ca. 1 Sekunde, nachdem der Stillstand erreicht wurde, abgeschaltet wird.

Weiter ist aus der DE 10 2008 061 790 A1 eine automatische Abschaltlogik für Automatikfahrzeuge mit einer Verzögerungsschaltung im Stillstand bekannt, wobei zusätzlich frühestens ab Erreichen des Stillstands (= Nullgeschwindigkeit wird gemessen) eine Haltefunktion aktiviert werden kann. Aus der DE 10 2008 061 791 A1 geht ein ähnliches Verfahren hervor, wobei eine sog. Auto-Hold-Funktion aktiviert wird, wenn das Bremspedal im Fahrzeugstillstand gelöst wird, oder wenn der Fahrzeugstillstand erreicht ist, oder wenn ein automatischer Abschaltvorgang ausgeführt wird.

Weiter offenbart die DE 10 2010 000 615 A1 eine automatische Abschaltlogik für Automatikfahrzeuge, wobei bei Unterschreiten einer vorgegebenen Geschwindigkeit (z. B. 20 km/h) der Motor abgeschaltet wird. Wird im weiteren Verlauf, also während der Motor aus ist, eine Nullgeschwindigkeit gemessen (tatsächliche Geschwindigkeit kann aufgrund Sensorungenauigkeiten ungleich Null sein), wird eine Bremssteuerung mit sukzessiver Steigerung der Bremskraft zum Halten des Stillstands aufgebaut.

Schließlich offenbart die US 2011/136624 A1 ein Fahrzeugbremssystem mit einer Start-Stopp-Einrichtung, in dem eine Steuereinheit den Motor abschaltet, wenn der Fahrer das Bremspedal niederdrückt und die Fahrzeuggeschwindigkeit gleich null ist. Anschließend wird der Bremsdruck im Bremssystem eingesperrt.

Aufgabe der Erfindung ist nun, eine Steuereinheit und ein entsprechendes Verfahren anzugeben, welche eine ungewollte Fahrzeugbewegung während eines eingeleiteten automatischen Abschaltvorgangs der Antriebsmaschine, insbesondere bei Abbruch des Abschaltvorgangs verhindern.

Diese Aufgabe wird erfindungsgemäß durch eine Steuereinheit nach Patentanspruch 1 und ein Verfahren nach Anspruch 7 gelöst. Vorteilhafte Weiterbildungen sind die Gegenstände der abhängigen Ansprüche.

Der Erfindung liegt die Überlegung zugrunde, eine Abschaltlogik vorzusehen, bei der direkt mit Erreichen des Fahrzeugstillstands der Motor abgelegt wird, um das Rütteln des Motors beim Ausgehen im Anhalteruck zu verstecken, d. h. der automatische Abschaltvorgang wird bereits kurz vor Erreichen des Fahrzeugstillstands eingeleitet, so dass das Ausgehen des Motors mit dem Erreichen des Fahrzeugstillstands in etwa zusammenfällt.

Wenn der Fahrer allerdings während des Ausschaltvorgangs, der bei betätigtem Bremspedal ausgelöst wird, das Bremspedal löst, weil er weiterfahren will (sog. Change-of-Mind Situation), noch bevor der Fahrzeugstillstand erreicht ist, ist das Fahrzeug nicht mehr gegen ein Rückrollen gesichert. Der Fahrer betätigt möglicherweise bereits das Fahrpedal und kann demnach selbst auch das Rückrollen nicht verhindern.

Unter Berücksichtigung obiger Überlegung ist der erste Aspekt der Erfindung auf eine Steuereinheit zum Verhindern einer ungewollten Fahrzeugbewegung während eines automatischen Abschaltvorgangs einer Antriebsmaschine in einem Kraftfahrzeug gerichtet, wobei mittels einer Start-Stopp-Einrichtung ein automatischer Abschaltvorgang vor Erreichen des Stillstands eingeleitet wird, wenn das Kraftfahrzeug aufgrund einer Verzögerungsanforderung (aufgrund manueller Bremsbetätigung oder aufgrund automatischer Bremsbetätigung eines Fahrerassistenzsystems) abgebremst wird und insb. die Geschwindigkeit des Fahrzeugs kleiner als eine vorgegebene erste (feste oder variable) Geschwindigkeitsschwelle ist, so dass in etwa mit Erreichen des Fahrzeugstillstands (bzw. bei erkanntem Fahrzeugstillstand) die Antriebsmaschine abgeschaltet ist bzw. wird. Erfindungsgemäß umfasst die Steuereinheit
- Mittel zum Erfassen eines ersten Signals über das zeitnahe Erreichen des Fahrzeugstillstands,
- Mittel zum Erfassen eines zweiten Signals über das zeitnahe Erreichen der fehlenden Selbstlauffähigkeit der Antriebsmaschine aufgrund eines eingeleiteten automatischen Abschaltvorgangs der Antriebsmaschine, und
- Mittel zum Veranlassen, dass ein Bremsdruck in passender Höhe (also ein variabel vorgebbarer Bremsdruck) im Bremssystem eingesperrt wird, wenn das erste und zweite Signal erfasst werden.
Wird also festgestellt, dass der Motor aufgrund eines automatisch eingeleiteten Abschaltvorgangs voraussichtlich in Kürze nicht mehr selbstlauffähig ist (also ohne eine entsprechende Startvorrichtung durchstarten kann) und der Fahrzeugstillstand bevor steht (aber noch nicht erreicht ist), wird der Bremsdruck in passender Höhe schon vor Erreichen des Fahrzeugstillstands eingesperrt und dieser Druck beibehalten, bis der anschließende automatische Anschaltvorgang der Antriebsmaschine beendet ist und ein Antriebsmoment in der Höhe bereit gestellt wird, dass das Fahrzeug nicht mehr rückwärts rollen kann bzw. wieder vorwärts fährt. Das Fahrzeug wird somit in den sicheren Stillstand gebremst, und zwar auch dann, wenn der Fahrer selbst nicht mehr auf dem Bremspedal steht bzw. eine entsprechende Verzögerungsanforderung vorliegt. Das zeitnahe Erreichen des Fahrzeugstillstands kann bspw. dann festgestellt werden, wenn anhand ausgewerteter Signale erkannt oder vermutet wird, dass der Fahrzeugstillstand innerhalb eines definierten Zeitfensters, bspw. innerhalb von ca. 500ms erreicht wird.

Zur weiteren Absicherung kann vorteilhafterweise durch entsprechende Mittel ein drittes Signal bzgl. des Unterschreitens einer vorgegebenen zweiten Geschwindigkeitsschwelle erfasst werden, und ein Einsperren des Bremsdrucks in geeigneter Höhe nur dann veranlasst werden, wenn zusätzlich zu den beiden oben genannten Signalen das dritte Signal erfasst wird, wenn also die aktuellen Fahrzeuggeschwindigkeit kleiner als die vorgegebene zweite Geschwindigkeitsschwelle ist. Diese zweite Geschwindigkeitsschwelle kann fest bei z. B. 3 km/h oder variabel vorgegeben werden.

Zur weiteren Absicherung kann vorteilhafterweise zusätzlich oder alternativ zur Auswertung des dritten Signals durch entsprechende Mittel ein viertes Signal bzgl. des Überschreitens einer vorgegebenen Steigungsschwelle der Fahrbahn erfasst werden, und ein Einsperren des Bremsdrucks in geeigneter Höhe nur dann veranlasst werden, wenn zusätzlich zu den beiden oben genannten Signalen (und ggf. zum dritten Signal) auch das vierte Signal erfasst wird, wenn also erkannt wird, dass die aktuelle Fahrbahnsteigung größer als eine vorgegebene Steigungsschwelle ist. Diese Bedingung ist deshalb von Vorteil, weil insb. bei größeren Steigungen eine Rückrollgefahr bei gelöster Bremse besteht. Diese Steigungsschwelle kann fest bei z. B. 1,5% Steigung, oder variabel vorgegeben werden.

Da die Gefahr des Zurückrollens in der Regel auch nur dann besteht, wenn der Fahrer das Bremspedal während des Abschaltvorgangs löst, weil der doch weiterfahren möchte, kann zusätzlich die Bremspedalbetätigung überwacht werden. Hierzu können vorteilhafterweise Mittel vorgesehen sein, welche ein fünftes Signal bzgl. der Bremspedalbetätigung erfassen, und das Einsperren des Bremsdrucks spätestens dann veranlasst werden, wenn ein Lösen des Bremspedals oder ein gelöstes Bremspedal erfasst wird.
In einer besonders vorteilhaften Ausgestaltung der Erfindung ergibt sich die Höhe des einzusperrenden Bremsdrucks aus einer Kennlinie, die in Abhängigkeit von der Steigung ein entsprechendes Bremsmoment vorgibt. Dabei wird umso mehr Bremsdruck eingesperrt, je größer die Steigung ist. Der entsprechende Bremsdruck ergibt sich dabei aus dem Reibwert der Bremsen (sog. cp-Wert).
Vorteilhafterweise wird der eingesperrte Bremsdruck dann zurückgenommen, wenn eine ungewollte Fahrzeugbewegung nicht mehr möglich ist. Da dies im sog. Change-of-Mind Fall in der Regel erst dann nicht mehr zu befürchten ist, wenn ein ausreichendes Antriebsmoment bereitgestellt werden kann, wird vorteilhafterweise der eingesperrte Bremsdruck erst dann aufgehoben bzw. zurückgenommen, wenn ein sechstes Signal bzgl. des Überschreitens eines definierten Antriebsmoments der Antriebsmaschine erfasst wird. Alternativ kann der eingesperrte Bremsdruck auch dann zurückgenommen werden, wenn das Fahrzeug aufgrund einer anderen Aktuatorik im Stillstand gehalten werden kann.
Analog zur erfindungsgemäßen Steuereinheit ist ein zweiter Aspekt der Erfindung auf ein entsprechendes Verfahren zum Verhindern einer ungewollten Fahrzeugbewegung während eines automatischen Abschaltvorgangs einer Antriebsmaschine in einem Kraftfahrzeug gerichtet, wobei mittels einer Start-Stopp-Einrichtung ein automatischer Abschaltvorgang vor Erreichen des Stillstands eingeleitet wird, wenn das Kraftfahrzeug aufgrund einer (manuellen) Verzögerungsanforderung abgebremst wird und insb. die Geschwindigkeit des Fahrzeugs kleiner als eine vorgegebene erste Geschwindigkeitsschwelle ist, so dass in etwa mit Erreichen des Fahrzeugstillstands die Antriebsmaschine abgeschaltet ist bzw. wird. Das erfindungsgemäße Verfahren sieht weiter vor, dass ein erstes Signal über das zeitnahe Erreichen des Fahrzeugstillstands und ein zweites Signal über das zeitnahe Erreichen der fehlenden Selbstlauffähigkeit der Antriebsmaschine aufgrund eines eingeleiteten automatischen Abschaltvorgangs der Antriebsmaschine erfassbar sind. Wenn das erste und zweite Signal erfasst werden, wird veranlasst, dass ein Bremsdruck in passender Höhe im Bremssystem eingesperrt wird.

Die vorstehenden Ausführungen zur erfindungsgemäßen Steuereinheit nach dem ersten Aspekt der Erfindung gelten in entsprechender Weise auch für das erfindungsgemäße Verfahren nach dem zweiten Aspekt der Erfindung.

Das erfindungsgemäße Verfahren, sowie deren vorteilhafte Ausgestaltungen können mittels eines implementierten Algorithmus oder einer entsprechenden Baugruppenanordnung in einem dafür vorgesehenen Steuergerät, insbesondere in einem Bremssteuergerät, durchgeführt werden.

Die Erfindung wird nun anhand eines Ausführungsbeispiels näher erläutert. Dabei zeigt
Fig. 1 eine Verschaltung verschiedener Steuer- und Funktionseinheiten zur Darstellung der Erfindung, und
Fig. 2 eine detaillierte Darstellung einer erfindungsgemäßen Steuereinheit zum Verhindern einer ungewollten Fahrzeugbewegung während eines automatischen Abschaltvorgangs einer Antriebsmaschine.

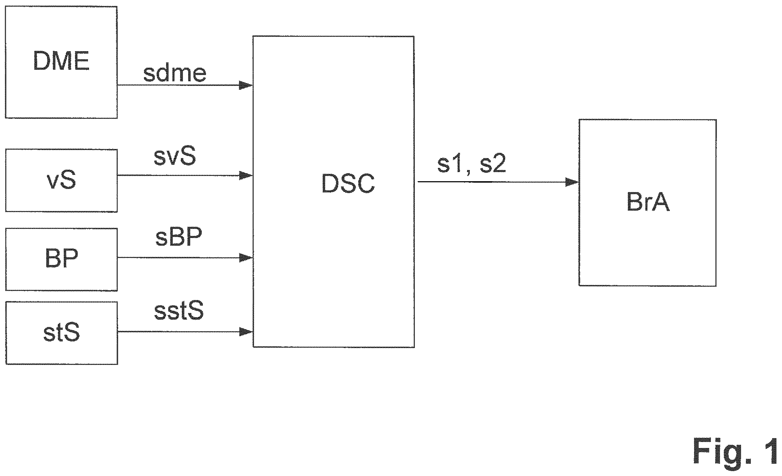

Die Fig. 1 zeigt als zentrales Element eine Steuereinheit DSC, welche verschiedene Eingangssignale sdme, svS, sBP und sstS erhält und Ansteuersignale s1 und s2 an eine Bremsaktuatorik BrA aussendet. Im Detail ist hierzu die Steuereinheit DSC mit einem Motorsteuergerät DME, zumindest einem Geschwindigkeitssensor vS, einem Bremspedal-Sensor BP und einer Sensor-Auswertungseinheit stS zum Ermitteln der Steigung derart verbunden, dass die Steuereinheit DSC ein Signal sdme vom Motorsteuergerät DME, ein Geschwindigkeitssignal svS von dem zumindest einem Geschwindigkeitssensor vS, ein Bremspedal-Betätigungssignal sBP vom Bremspedalsensor, und ein Steigungssignal sstS von der Sensor-Auswertungseinheit stS erfassen kann.

Die Sensor-Auswerteeinheit stS kann entweder ein Steigungssensor sein, der direkt die Steigung sensorisch ermitteln kann, oder eine Kombination aus einem Beschleunigungssensor mit einer entsprechenden Auswerteeinheit zum rechnerischen Ermitteln der Steigung aus einem Signal des Beschleunigungssensors sein. So kann bei einem Beschleunigungssensor, der die Beschleunigungen in x-, y- und z-Richtung messen kann, aus der gemessenen Beschleunigung in x-Richtung mit Hilfe von entsprechenden Algorithmen unter Berücksichtigung des anliegenden Motormoments, des Verzögerungsverhaltens (berechnet aus der Ableitung der Radgeschwindigkeiten) und ggf. weiterer Eingangsparameter die Fahrbahnsteigung zumindest näherungsweise ermittelt werden.

Anstelle eines einzigen Geschwindigkeitssensors vS zur Ermittlung der Fahrzeuggeschwindigkeit können auch mehrere (z. B. vier) einzelne Geschwindigkeitssensoren an den Rädern des Fahrzeugs verbaut sein, wobei aus den Signalen aller Geschwindigkeitssensoren mittels eines geeigneten Verfahrens die Fahrzeuggeschwindigkeit ermittelt wird.

Ebenso kann anstelle eines Bremspedal-Betätigungssensors BP das Bremspedal-Betätigungssignal sBP aus einem gemessenen Fahrervordruck, den der Fahrer über das Bremspedal aufbaut, ermittelt werden.

Diese Signale sdme, svS, sBP und sstS werden in der Steuereinheit DSC dahingehend ausgewertet, ob zum Verhindern einer ungewollten Fahrzeugbewegung während eines automatisch eingeleiteten Abschaltvorgangs der Antriebsmaschine ein Einsperren des Bremsdrucks (in passender Höhe) veranlasst werden muss bzw. wann der eingesperrte Bremsdruck wieder zurückgenommen werden kann. Soll der Bremsdruck eingesperrt werden, sendet die Steuereinheit DSC ein Signal s1 an die den Bremsdruck einsperrende Bremsaktuatorik BrA, wobei das Signal s1 bereits die Information darüber enthält, in welcher Höhe der Bremsdruck eingesperrt werden soll. Soll der Bremsdruck zurückgenommen werden, wird ein Signal s2 an die Bremsaktuatorik gesendet.

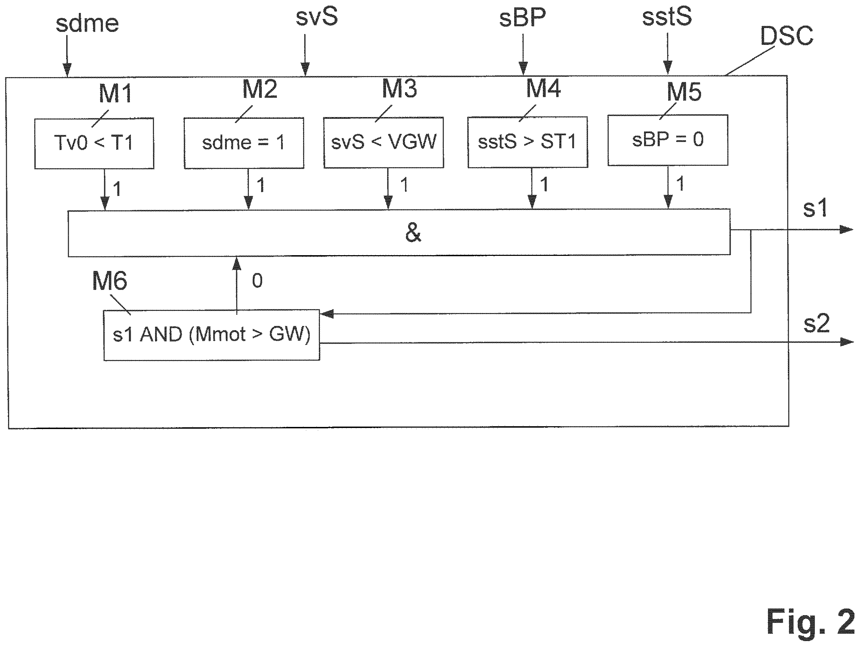

Die Fig. 2 zeigt eine Detaildarstellung einer erfindungsgemäßen Steuereinheit DSC. Wie unter Fig. 1 bereits aufgeführt, werden der Steuereinheit DSC verschiedene Eingangssignale sdme, svS, sBP, und sstS zugeführt, welche in der Steuereinheit DSC entsprechend berücksichtigt werden.

Insbesondere ist in der Steuereinheit DSC ein erstes Mittel M1 vorgesehen, das ein Signal Tv0 über den Zeitpunkt des bevorstehenden Fahrzeugstillstands, welches wiederum unter Berücksichtigung des Geschwindigkeitssignals svS ermittelbar ist, erfasst. Ist der ermittelte Zeitpunkt bzw. die ermittelte Zeitdauer Tv0 kleiner als ein vorgegebener erster Zeitdauergrenzwert T1 (z. B. kleiner 500ms), wird ein zeitnahes Erreichen des Fahrzeugstillstands (Tv0 < T1) detektiert und ein Signal "1" an eine UND-Verknüpfungseinheit & gesendet.

Weiter ist ein zweites Mittel M2 vorgesehen, das ein Signal sdme über das zeitnahe Erreichen der fehlenden Selbstlauffähigkeit der Antriebsmaschine erfasst. Dieses Signal wird im Motorsteuergerät ermittelt und von dort an die maßgebliche Steuereinheit DSC übertragen. Wird dieses Signal sdme erfasst, wird ein Signal "1" an eine UND-Verknüpfungseinheit & gesendet. Alternativ kann das Motorsteuergerät auch ein allgemeines Signal über den Zeitpunkt des Erreichens der fehlenden Selbstlauffähigkeit übertragen. Die maßgebliche Steuereinheit DSC würde dann ermitteln, wann der Zeitpunkt des Erreichens der fehlenden Selbstlauffähigkeit kleiner als ein vorgegebener zweiter Zeitdauergrenzwert wäre. Sobald dies ermittelt ist, würde ein zeitnahes Erreichen der fehlenden Selbstlauffähigkeit s der Antriebsmaschine detektiert und ein Signal "1" an eine UND-Verknüpfungseinheit & gesendet werden.

Weiter ist ein drittes Mittel M3 vorgesehen, das ein Geschwindigkeitssignal svS erfasst. Ist die erfasste Geschwindigkeit svS kleiner als eine vorgegebene Geschwindigkeitsschwelle VGW, wird also ein Unterschreiten der vorgegebenen Geschwindigkeitsschwelle (svS < VGW) detektiert, wird ebenfalls ein Signal "1" an die UND-Verknüpfungseinheit & gesendet.

Weiter ist ein viertes Mittel M4 vorgesehen, das ein Steigungssignal sstS erfasst. Ist die erfasste Steigung sstS größer als eine vorgegebene Steigungsschwelle ST1, wird ein Überschreiten der vorgegebenen Steigungsschwelle ST1 (sstS > ST1) detektiert und ebenfalls ein Signal "1" an die UND-Verknüpfungseinheit & gesendet.

Weiter ist ein fünftes Mittel M5 vorgesehen, das ein Signal sBP zur Bestimmung der Stellung des Bremspedals erfasst. Ist die erfasste Signal sBP Null, wird ein Lösen des Bremspedals detektiert und ebenfalls ein Signal "1" an die UND-Verknüpfungseinheit & gesendet.

Schließlich ist noch ein sechstes Mittel M6 vorgesehen, welches eine "0" an die UND-Verknüpfung & sendet, wenn festgestellt wird, dass die Steuereinheit DSC ein Signal s1 aussendet und die Antriebsmaschine ein Motormoment Mmot bereitstellt, das größer als ein vorgegebener Grenzwert GW ist. Der Grenzwert GW ist derart festgelegt, dass bei Überschreitung des Grenzwertes GW das Antriebsmoment Mmot so groß ist, dass das Fahrzeug aufgrund des Antriebsmoments Mmot zumindest nicht rückwärts rollen kann. Dieser Grenzwert GW ist abhängig von der Steigung und Fahrzeugmasse und wird laufend neu ermittelt. Ist diese Bedingung nicht erfüllt, sendet das sechste Mittel M6 eine "1" an die UND-Verknüpfung &.

Die UND-Verknüpfung wertet nun alle Eingangssignale aller Mittel M1 bis M6 dahingehend aus, dass diese bei Vorliegen aller Bedingungen, also beim ausschließlichen Empfangen von "1" ein Signal s1 an eine Bremsaktuatorik aussendet, die daraufhin den zuletzt aufgebrachte Bremsdruck aufrechterhalten, um zu verhindern, dass das Fahrzeug zurückrollt.

Sobald die UND-Verknüpfung & das Signal s1 aussendet, wird mittels des sechsten Mittels M6 überprüft, wann (nach erfolgtem Start der Antriebmaschine) ein Antriebsmoment Mmot der Antriebsmaschine vorliegt, das den relevanten Grenzwert GW überschreitet. Sobald ein derartiges Antriebsmoment erreicht wird, sendet das sechste Mittel M6 ein Signal s2 an die Bremsaktuatorik zum Aufgeben des eingesperrten Bremsdrucks. Gleichzeitig wird aufgrund der fehlenden UND-Verknüpfung & (das sechste Mittel M6 sendet eine 0 aus) das Signal s1 zurückgenommen.

Alternativ zu der hier dargestellten Auswertelogik (UND-Verknüpfung & und Mittel M6), dann die Auswertelogik auch derart aufgebaut sein, dass die Ausgangsbedingungen (zum Abbau des Bremsdrucks) separat definiert ist. Ein Wegfall einer Eingangsbedingung (die hinsichtlich des Aufbaus des Bremsdrucks ausgewertet wird) würde dann nicht direkt wieder zu einem Abbau des Bremsdrucks führen.

Durch die hier offenbarte Steuereinheit und das erfindungsgemäße Verfahren kann auf eine einfache Art und Weise sichergestellt werden, dass das Fahrzeug im sog. Change-of-Mind Fall nicht ungewollt zurückrollt. Durch das Einsperren des Bremsdrucks können zusätzlich unkomfortable (spür-, fühl- und hörbar) aktive Druckaufbauten als alternative Möglichkeit, um ein Rückwärtsrollen zu verhindern, vermieden werden.

## Patentansprüche

1. Steuereinheit (DSC) zum Verhindern einer ungewollten Fahrzeugbewegung während eines automatischen Abschaltvorgangs einer Antriebsmaschine in einem Kraftfahrzeug, wobei mittels einer Start-Stopp-Einrichtung ein automatischer Abschaltvorgang eingeleitet wird, wenn das Kraftfahrzeug aufgrund einer Verzögerungsanforderung abgebremst wird, **dadurch gekennzeichnet, dass** mittels der Start-Stopp-Einrichtung ein automatischer Abschaltvorgang vor Erreichen des Stillstands eingeleitet wird, wenn das Kraftfahrzeug aufgrund einer Verzögerungsanforderung abgebremst wird und insb. die Geschwindigkeit des Fahrzeugs kleiner als eine vorgegebene erste Geschwindigkeitsschwelle ist, so dass in etwa mit Erreichen des Fahrzeugstillstands die Antriebsmaschine abgeschaltet ist, mit
- Mittel (M1) zum Erfassen eines ersten Signals über das zeitnahe Erreichen des Fahrzeugstillstands (Tv0<T1),
- Mittel (M2) zum Erfassen eines zweiten Signals (sdme) über das zeitnahe Erreichen der fehlenden Selbstlauffähigkeit der Antriebsmaschine aufgrund eines eingeleiteten automatischen Abschaltvorgangs der Antriebsmaschine, und
- Mittel (&) zum Veranlassen, dass ein Bremsdruck in passender Höhe im Bremssystem eingesperrt wird (s1), wenn das erste (Tv0<T1) und zweite Signal (sdme) erfasst werden.

2. Steuereinheit nach Anspruch 1, **gekennzeichnet durch** Mittel (M3) zum Erfassen eines dritten Signals (svS) über das Unterschreiten einer vorgegebenen zweiten Geschwindigkeitsschwelle (VGW), und wobei ein Einsperren des Bremsdrucks in passender Höhe veranlasst wird (s1), wenn zusätzlich das dritte Signal erfasst wird (svS<VGW).

3. Steuereinheit nach einem der vorangegangenen Ansprüche, **gekennzeichnet, durch** Mittel (M4) zum Erfassen eines vierten Signals (sstS) über das Überschreiten einer vorgegebenen Steigungsschwelle (ST1), und wobei ein Einsperren des Bremsdrucks in passender Höhe veranlasst wird (s1), wenn zusätzlich das vierte Signal (sstS>ST1) erfasst wird.

4. Steuereinheit nach einem der vorangegangen Ansprüche, **gekennzeichnet durch** Mittel (M5) zum Erfassen eines fünften Signals (sBP) über eine Bremspedalbetätigung, und wobei ein Einsperren des Bremsdrucks in passender Höhe dann veranlasst wird (s1), wenn zusätzlich ein Lösen des Bremspedals (sBP=0) oder ein gelöstes Bremspedal erfasst wird.

5. Steuereinheit nach einem der vorangegangenen Ansprüche, **dadurch gekennzeichnet, dass** die Höhe des Bremsdrucks in Abhängigkeit von der Steigung vorgebbar ist.

6. Steuereinheit nach einem der vorangegangenen Ansprüche, **dadurch gekennzeichnet, dass** der eingesperrte Bremsdruck zurückgenommen wird (s2), wenn ein sechstes Signal (Mmot) über das Überschreiten eines definierten Antriebsmoment (GW) der Antriebsmaschine erfasst wird.

7. Verfahren zum Verhindern einer ungewollten Fahrzeugbewegung während eines automatischen Abschaltvorgangs einer Antriebsmaschine in einem Kraftfahrzeug, wobei mittels einer Start-Stopp-Einrichtung ein automatischer Abschaltvorgang eingeleitet wird, wenn das Kraftfahrzeug aufgrund einer Verzögerungsanforderung abgebremst wird, **dadurch gekennzeichnet, dass** mittels der Start-Stopp-Einrichtung ein automatischer Abschaltvorgang vor Erreichen des Stillstands eingeleitet wird, wenn das Kraftfahrzeug aufgrund einer Verzögerungsanforderung abgebremst wird und insb. die Geschwindigkeit des Fahrzeugs kleiner als eine vorgegebene erste Geschwindigkeitsschwelle ist, so dass in etwa mit Erreichen des Fahrzeugstillstands die Antriebsmaschine abgeschaltet ist, wobei
- ein erstes Signal über das zeitnahe Erreichen des Fahrzeugstillstands erfassbar ist (Tv0<T1),
- ein zweites Signal (sdme) über das zeitnahe Erreichen der fehlenden Selbstlauffähigkeit der Antriebsmaschine aufgrund eines eingeleiteten automatischen Abschaltvorgangs der Antriebsmaschine erfassbar ist, und
- veranlasst wird, dass ein Bremsdruck in passender Höhe im Bremssystem eingesperrt wird (s1), wenn das erste und zweite Signal erfasst werden.

## Claims

1. A control unit (DSC) for preventing an undesired vehicle motion during an automatic switch-off process of a drive machine in a motor vehicle, wherein an automatic switch-off process is initiated by means of a start-stop apparatus if the motor vehicle is braked because of a deceleration request, **characterised in that** an automatic switch-off process is initiated by means of the start-stop apparatus before the standstill is reached if the motor vehicle is braked because of a deceleration request and more especially the speed of the vehicle is less than a specified first speed threshold, such that the drive machine is switched off approximately when the vehicle standstill is reached, said control unit comprising
- means (M1) for capturing a first signal (Tv0<T1) indicating that the vehicle standstill will soon be reached,
- means (M2) for capturing a second signal (sdme) indicating that an inability of the drive machine to operate in a self-sustaining manner will soon be reached because of an initiated automatic switch-off process of the drive machine, and
- means (&) for prompting a brake pressure of a suitable level to be confined in the braking system (s1) if the first signal (Tv0<T1) and second signal (sdme) are captured.

2. A control unit according to claim 1, **characterised by** means (M3) for capturing a third signal (svS) regarding the undershooting of a specified second speed threshold (VGW), and wherein a confinement of the brake pressure of a suitable level is prompted (s1) if the third signal is additionally captured (svS<VGW).

3. A control unit according to any one of the preceding claims, **characterised by** means (M4) for capturing a fourth signal (sstS) regarding the overshooting of a specified slope threshold (ST1), and wherein a confinement of the brake pressure of a suitable level is prompted (s1) if the fourth signal (sstS>ST1) is additionally captured.

4. A control unit according to any one of the preceding claims, **characterised by** means (M5) for capturing a fifth signal (sBP) regarding a brake pedal actuation, and wherein a confinement of the brake pressure of a suitable level is prompted (s1) if a release of the brake pedal (sBP=0) or a released brake pedal is detected.

5. A control unit according to any one of the preceding claims, **characterised in that** the level of the brake pressure can be specified depending on the slope.

6. A control unit according to any one of the preceding claims, **characterised in that** the confined brake pressure is cancelled (s2) if a sixth signal (Mmot) regarding the overshooting of a defined drive torque (GW) of the drive machine is detected.

7. A method for preventing an undesired vehicle motion during an automatic switch-off process of a drive machine in a motor vehicle, wherein an automatic switch-off process is initiated by means of a start-stop apparatus if the motor vehicle is braked because of a deceleration request, **characterised in that** an automatic switch-off process is initiated by means of the start-stop apparatus before the standstill is reached if the motor vehicle is braked because of a deceleration request and more especially the speed of the vehicle is less than a specified first speed threshold, such that the drive machine is switched off approximately when the vehicle standstill is reached, wherein
- a first signal (Tv0<T1) indicating that the vehicle standstill will soon be reached can be captured,
- a second signal (sdme) indicating that an inability of the drive machine to operate in a self-sustaining manner will soon be reached because of an initiated automatic switch-off process of the drive machine can be captured, and
- a brake pressure of a suitable level is prompted to be confined in the braking system (s1) if the first and second signal are captured.

## Revendications

1. Unité de commande (DSC) permettant d'empêcher un déplacement involontaire d'un véhicule pendant un processus de déconnexion automatique d'un moteur d'entraînement dans un véhicule, dans laquelle, un processus de déconnexion automatique est engagé au moyen d'un dispositif Start-Stopp lorsque le véhicule est freiné en raison d'une exigence de décélération,
**caractérisée en ce qu'**
un processus de déconnexion automatique est engagé au moyen du dispositif Start-Stopp avant d'avoir atteint l'arrêt lorsque le véhicule est freiné en raison d'une exigence de décélération, et, en particulier que la vitesse du véhicule est inférieure à un premier seuil de vitesse prédéfini, de sorte que, le moteur d'entraînement soit déconnecté, environ avec l'atteinte de l'arrêt du véhicule, cette unité de commande comportant :
- des moyens (M1) permettant de détecter un premier signal concernant l'atteinte proche de l'arrêt du véhicule (TvO<Tl),
- des moyens (M2) permettant de détecter un second signal (sdme) concernant l'atteinte proche de l'absence de capacité de fonctionnement autonome du moteur d'entraînement en raison de l'engagement d'un processus d'arrêt automatique de ce moteur d'entraînement, et
- des moyens (&) permettant de provoquer le blocage de la pression de freinage à une hauteur appropriée dans le système de freinage (s1) lorsque le premier signal (Tv0<T1) et le second signal (sdme) sont détectés.

2. Unité de commande conforme à la revendication 1,
**caractérisée par**
des moyens (M3) permettant de détecter un troisième signal (svS) concernant le passage au-dessous d'un second seuil de vitesse prédéfini (VGW), et un blocage de la pression de freinage à la hauteur appropriée est provoqué (s1) lorsque le troisième signal est en outre détecté (svS<VGW).

3. Unité de commande conforme à l'une des revendications précédentes,
**caractérisée par**
des moyens (M4) permettant de détecter un quatrième signal (sstS) concernant le dépassement d'un seuil de pente prédéfini (ST1), et un blocage de la pression de freinage à la hauteur appropriée est provoqué (s1) lorsque le quatrième signal (sstS>ST1) est en outre détecté.

4. Unité de commande conforme à l'une des revendications précédentes,
**caractérisée par**
des moyens (M5) permettant de détecter un cinquième signal (sBP) concernant un actionnement de la pédale de frein, et un blocage de la pression de freinage à la hauteur approprié est provoqué (s1) lorsqu'un relâchement de la pédale de frein (sBP=0) ou une pédale de frein relâchée est en outre détecté.

5. Unité de commande conforme à l'une des revendications précédentes,
**caractérisée en ce que**
la hauteur de la pression de freinage peut être prédéfinie en fonction de la pente.

6. Unité de commande conforme à l'une des revendications précédentes,
**caractérisée en ce que**
le blocage de la pression de freinage est annulé (s2) lorsqu'un sixième signal (Mmot) concernant le dépassement d'un couple d'entraînement défini (GW) du moteur d'entraînement est détecté.

7. Procédé permettant d'empêcher un déplacement involontaire d'un véhicule pendant un processus de déconnexion automatique d'un moteur d'entraînement dans un véhicule, selon lequel, un processus de déconnexion automatique est engagé au moyen d'un dispositif Start-Stopp lorsque le véhicule est freiné en raison d'une exigence de décélération,
**caractérisé en ce qu'**
un processus de déconnexion automatique est engagé au moyen du dispositif Start-Stopp, avant d'avoir atteint l'arrêt lorsque le véhicule est freiné, en raison d'une exigence de décélération, et en particulier, que la vitesse du véhicule est inférieure à un premier seuil de vitesse prédéfini, de sorte que, le moteur d'entraînement soit déconnecté, environ avec l'atteinte de l'arrêt du véhicule,
procédé selon lequel :
- un premier signal concernant l'atteinte proche de l'arrêt du véhicule peut être détecté (Tv0<T1),
- un second signal (sdme) concernant l'atteinte proche de l'absence de capacité de fonctionnement autonome du moteur d'entraînement peut être détecté en raison de l'engagement d'un processus d'arrêt automatique de ce moteur d'entraînement, et
- on provoque le blocage de la pression de freinage à une hauteur appropriée dans le système de freinage (s1) lorsque le premier signal et le second signal ont été détectés.
